# EUROPEAN PATENT APPLICATION

(11) **EP 2 364 776 A1**
(43) Date of publication of application: **14.09.2011**
(21) Application number: 10305199.1
(22) Date of filing: 26.02.2010
(51) Int. Cl.: B01J 35/04, B01J 19/24, C01B 3/40, C07C 45/28, C07C 45/36, C07C 51/265, C10G 45/32, C10G 45/58

(54) **Catalyst coated honeycomb substrates and methods of using them**

(71) Applicant: Corning Incorporated, Corning NY 14831 (US)
(72) Inventor: Barthe, Philippe, 77590, Bois le Roi (FR)
(74) Representative: Le Roux, Martine

(57) **Abstract**

An essentially nonporous honeycomb substrate having greater than 900 cells per square inch and with a catalyst coating having a thickness less than 1 micron. The coated essentially nonporous honeycomb may be used, for example, for gas phase reactions.

## Description

This disclosure relates to essentially nonporous honeycomb substrates with a catalyst coating having a thickness less than 1 micron. The coated essentially nonporous honeycomb may be used, for example, for gas phase reactions.

### BACKGROUND

Performance of industrial processes that are operated at the moment can be impacted negatively by heat and mass transport limitations with the effectiveness factor for reactor performance being less than 1.

In order to minimize heat and mass transport limitations in the case of industrial gas phase catalytic reactions, various approaches have been implemented.

One approach is the reduction of the size of the catalyst. In the case of industrial catalysts, for example, pellets, beads, rings, or tablets. There is a limit to this reduction in size as pressure drop of the corresponding catalyst bed increases dramatically as catalyst particles reduce in size. Another parameter that limits this reduction in size is the mechanical strength of the corresponding catalysts particles with for instance, in the case of pellets, no industrial catalysts being used below 1 mm in size for its lowest dimension.

Another approach was developed with fluidized bed catalysts, but once more catalysts particles must be of an appropriate small size to enable fluidization but at the same time not too small to avoid clogging of filters in the reactor. As a result of these requirements, industrial catalysts in a fluidized bed reactor are typically larger than 20 µm.

Another approach was proposed with a catalyst being coated on a carrier. In order to ensure adhesion and mechanical strength to the catalytic material, the coating is typically over 10 µm, for instance, washcoated honeycomb monoliths for automotive after treatment.

Many attempts have been made to minimize the impact of heat and mass transport in industrial processes dealing with gas phase catalytic reactions. A process where heat and mass transport limitations have very limited impact, resulting in an overall benefit for the process, would be advantageous.

### SUMMARY

The applicant has developed the combination of a high surface to volume and essentially nonporous honeycomb substrate with a thin catalyst coating deposited on the surface to minimize the impact of heat and mass transport limitations in gas phase catalytic reactions.

One embodiment is an article comprising an essentially nonporous honeycomb substrate having greater than 900 cells per square inch; and a catalyst coating on the cell walls of the essentially nonporous honeycomb substrate, said catalyst coating having a thickness less than 1 micron.

Another embodiment is a method comprising providing an article comprising an essentially nonporous honeycomb substrate having greater than 900 cells per square inch; and a catalyst coating on the cell walls of the essentially nonporous honeycomb substrate, said catalyst coating having a thickness less than 1 micron; and contacting a gas phase reactant with the catalyst coating to catalyze a gas phase reaction.

Additional features and advantages will be set forth in the detailed description which follows, and in part will be readily apparent to those skilled in the art from the description or recognized by practicing the embodiments as described in the written description and claims hereof.

It is to be understood that both the foregoing general description and the following detailed description are merely exemplary, and are intended to provide an overview or framework to understand the nature and character of the claims.

### DETAILED DESCRIPTION

One embodiment is an article comprising an essentially nonporous honeycomb substrate having greater than 900 cells per square inch; and a catalyst coating on the cell walls of the essentially nonporous honeycomb substrate, said catalyst coating having a thickness less than 1 micron.

The porosity of the essentially nonporous honeycomb substrate, as measured by mercury porosimetry, is less than 0.1 milliliters per gram. In some embodiments, the porosity is less than 0.05 milliliters per gram, for example, less than 0.02 milliliters per gram.

The essentially nonporous honeycomb substrate comprises an inlet end, an outlet end, and a multiplicity of cells extending from the inlet to the outlet end, the cells being defined by intersecting cell walls.

The cross-section shape of the channels may be square, round, triangular or any suitable geometry. In one embodiment, round cells may be used to reduce non uniform catalyst coating on the cell walls, for example, accumulation of the catalyst coating in corners where cell walls intersect.

The essentially nonporous honeycomb substrate may be made from any suitable material, for example, glass, glass-ceramic, or metal. It advantageously comprises a glass.

The essentially nonporous honeycomb substrate may be made using any suitable technique. For example, the essentially nonporous honeycomb substrate may be made by preparing a batch mixture, extruding the mixture through a die forming a honeycomb shape, drying, and sintering the essentially nonporous honeycomb substrate. The essentially nonporous honeycomb substrate may also be made for example, by redraw reduction.

In one embodiment, the essentially nonporous honeycomb substrate has a cell density of greater than 900 cells per square inch (cpsi), for example, greater than 1500 cpsi, greater than 5000 cpsi, greater than 10,000 cpsi, or greater than 20,000 cpsi. In one embodiment, the essentially nonporous honeycomb substrate has a cell density of 25,000 cpsi or more.

The essentially nonporous honeycomb substrate has a catalyst coating on the cell walls of the essentially nonporous honeycomb substrate, the thickness of which is less than 1 micron. In some embodiments, the catalyst coating has a thickness less than 0.5 microns, less than 0.2 microns, or less than 0.1 microns. In one embodiment, the catalyst coating has a thickness of 140 nanometers or less. Advantageously it has a thickness of less than 100 nanometers. The catalyst coating comprises an active component and optionally comprises a carrier component.

The catalyst coating comprises an active component such as Pt, Pd, Rh, Ru, Re, Au, Ag, Ni, Fe, Co, Cu, Mn, V, Mo, Sn, Sb, Cd, Cr, Zn, Ga, Bi, Nb, In, Pb, Ce, or any combinations of these. The catalyst coating may optionally comprise a carrier component, for example, TiO₂, Al₂O₃, SiO₂, CeO₂ La₂O₃, Y₂O₃, Pr₂O₃, carbon, ZrO₂, MgO, zeolites, or any combination of these. The catalyst coating, in some embodiments, may comprise more than 1 layer, for example, 2 layers. In some embodiments, the catalyst coating comprises a carrier layer that comprises a carrier component. In one embodiment, the catalyst coating comprises a layer of an active component. In some embodiments, the catalyst coating comprises an active component and a carrier component in one layer.

The layers may be applied to the essentially nonporous honeycomb substrate using any suitable technique, for example, dipping, spraying, evaporation, spin coating or sputtering.

Another embodiment is a method comprising providing an article comprising an essentially nonporous honeycomb substrate having greater than 900 cells per square inch; and a catalyst coating on the cell walls of the essentially nonporous honeycomb substrate, said catalyst coating having a thickness less than 1 micron; and contacting a gas phase reactant with the catalyst coating to catalyze a gas phase reaction.

Contacting the gas phase reactant with the catalyst coating may be done by, for example, passing a stream of gas phase reactant through an internal volume (e.g. through the cells) of the article.

The method can be used for any appropriate gas phase reaction and associated reactants. In one embodiment, the gas phase reaction is an oxidation reaction, hydrogenation reaction, ammoxidation reaction, hydration reaction, carbonylation reaction, reforming reaction, water gas shift reaction, hydrocracking reaction, isomerization reaction, halogenation reaction, phosgenation reaction, acylation reaction, or polymerization reaction. In some embodiments, the gas phase reaction is toluene oxidation or 3-picoline selective oxidation. The method is advantageously carried out with an article of the invention showing the following features: the catalyst coating has a thickness less than 100 nanometers and/or the honeycomb has greater than 5000 cells per square inch.

Various embodiments will be further clarified by the following examples.

### EXAMPLES

Pyrex^{®} redrawn monoliths were used as the essentially nonporous honeycomb substrates for the following examples. Their properties are listed in Table 1.

**TABLE 1**

| | |
|---|---|
| Diameter (cm) | 1.4 |
| Lenqth (cm) | 2.4 |
| Cell diameter (µm) | 255 |
| Web thickness (µm) | 35 |
| Cells in part | 1830 |
| Cpsi | 7671 |
| Total internal volume (ml) | 1.86 |
| Total internal surface area (cm²) | 1497 |

The essentially nonporous honeycomb substrates were fired at 500°C in air for 4 hours to activate the surface and achieve good wetting of the internal surface area. A carrier layer was deposited by filling the internal volume of the essentially nonporous honeycomb substrate with a solution of titanium isopropoxide in isopropyl alcohol with acetic acid and acetylacetone (solution which is 6.3 g/l equivalent TiO₂). Capillary forces were used, taking care not to immerse the essentially nonporous honeycomb substrate in the solution so that no air would get trapped in the channels. The essentially nonporous honeycomb substrate having its internal volume filled with solution was carefully set on a centrifuge system with a rotating arm and honeycomb located at the end of the arm, about 40 cm from rotating center. Excess liquid was evacuated by using 600 rpm during 2 minutes. The coated essentially nonporous honeycomb monolith was allowed to dry in air at 60°C overnight and then fired at 500°C in air for 4 hours.

The deposition process was repeated with an aqueous solution of vanadyl oxalate (5.00 g/l equivalent V₂O₅), to add an active layer. The essentially nonporous honeycomb substrate having its internal volume filled with solution was carefully set on a centrifuge system with a rotating arm and honeycomb located at the end of the arm, about 40 cm from rotating center. Excess liquid was evacuated by using 600 rpm during 2 minutes. The coated essentially nonporous honeycomb monolith was then allowed to dry in air at 60°C overnight and then fired at 500°C in air for 4 hours.

After TiO₂ and V₂O₅ deposition and firing, the essentially nonporous honeycomb monolith appeared orange compared with a translucent appearance before any deposition.

The prepared essentially nonporous honeycomb substrate coated with TiO₂ and V₂O₅ was used to process a 3-picoline selective oxidation reaction under the testing conditions listed in Table 2.

**TABLE 2**

| **Flow rates** | |
|---|---|
| O₂ | 7.5NTP ml/min |
| N₂ | 35 NTP ml/min |
| 3-picoline 5 vol % in water | 0.05 ml/min (liquid) |
| | |

| **Composition (molar basis)** | |
|---|---|
| O₂ | 6.80% |
| N₂ | 31.50% |
| 3-picoline | 0.50% |
| H₂O | 61.20% |

The liquids were collected after condensation at the reactor outlet and analyzed through gas chromatography (FID) and the gases were analyzed at the reactor outlet through gas chromatography (TCD). The results are provided in Table 3.

**TABLE 3**

| Temperature (°C) | 3-picoline conversion (%) | Aldehyde selectivity (%) | CO₂ selectivity (%) |
|---|---|---|---|
| 500 | 9.2 | 97.5 | 2.5 |
| 550 | 25.0 | 95.0 | 5.0 |

It should be understood that while the invention has been described in detail with respect to certain illustrative embodiments thereof, it should not be considered limited to such, as numerous modifications are possible without departing from the broad spirit and scope of the invention as defined in the appended claims.

Unless otherwise indicated, all numbers used on the specification and claims are to be understood as being modified in all instances by the term "about", whether or not so stated. It should also be understood that the precise numerical values used on the specification and claims form additional embodiments of the invention.

## Claims

1. An article comprising:
an essentially nonporous honeycomb substrate having greater than 900 cells per square inch; and
a catalyst coating on the cell walls of the essentially nonporous honeycomb substrate, said catalyst coating having a thickness less than 1 micron.

2. The article of claim 1, wherein the catalyst coating has a thickness less than 100 nanometers.

3. The article of claim 1 or 2, wherein the essentially nonporous honeycomb substrate comprises a glass.

4. The article of any one of claims 1-3, wherein the essentially nonporous honeycomb substrate has greater than 5000 cells per square inch.

5. The article of any one of claims 1-4, wherein the catalyst coating comprises more than 1 layer.

6. The article of claim 5, wherein the catalyst coating comprises a carrier layer.

7. The article of claim 6, wherein the catalyst coating comprises an active component layer.

8. The article of any one of claims 1-4, wherein the catalyst coating comprises a carrier component and an active component in one layer.

9. A method comprising:
providing an article of any one of claims 1-8; and
contacting a gas phase reactant with the catalyst coating to catalyze a gas phase reaction.

10. The method of claim 9, wherein the gas phase reactant is an organic reactant.

11. The method of claim 9, wherein the gas phase reaction is an oxidation reaction, hydrogenation reaction, ammoxidation reaction, hydration reaction, carbonylation reaction, reforming reaction, water gas shift reaction, hydrocracking reaction, isomerization reaction, halogenation reaction, phosgenation reaction, acylation reaction, or polymerization reaction.

12. The method of claim 9, wherein the gas phase reaction is toluene oxidation or 3-picoline selective oxidation.

13. The method of any one of claims 9-12, wherein the catalyst coating has a thickness less than 100 nanometers.

14. The method of any one of claims 9-13, wherein the essentially nonporous honeycomb has greater than 5000 cells per square inch.
